# EUROPEAN PATENT SPECIFICATION

(11) **EP 2 858 888 B1**
(45) Date of publication and mention of the grant of the patent: **24.05.2017**
(21) Application number: 13728818.9
(22) Date of filing: 11.06.2013
(51) Int. Cl.: B63B 21/50

(54) **SUBSEA CONNECTOR**
SUBSEA VERBINDER
CONNECTEUR SOUS-MARIN

(30) Priority: 11.06.2012 GB 201210263; 06.11.2012 GB 201219982
(43) Date of publication of application: 15.04.2015
(73) Proprietor: Flintstone Technology Limited, Dundee DD4 7HF (GB)
(72) Inventor: TAYLOR, Richard, Kendal Cumbria LA9 6FF (GB)
(74) Representative: Moreland, David
(86) International application number: PCT/GB2013/051535
(87) International publication number: WO 2013/186553

(56) References cited:
- EP-A1- 0 302 546
- WO-A1-89/11415
- GB-A- 2 178 101
- US-A1- 2012 031 320

## Description

### FIELD OF INVENTION

The present invention relates to a connector, and particularly, though not exclusively, to a subsea or underwater connector, e.g. for connecting a line or lines such as in the installation, mooring, anchoring or the like of apparatus or equipment.

### BACKGROUND TO INVENTION

In order to connect a line or lines, e.g. wire, chain or synthetic (such as polyester), lines for the installation, mooring or anchoring of equipment used subsea or underwater, e.g. in oil, gas, offshore wind and tidal energy industries, there needs to be a means of connecting and disconnecting the line or lines. Uses include installing a small subsea structure which can be lifted from the rear or back of a boat or from a rig and lowered to the sea-bed, through to permanent mooring of a floating production structure. On top-side this is straight-forward; however, when subsea beyond diver depth there needs to be a means or device such that a remotely operated vehicle (ROV) may both connect and disconnect the line. There are several such devices known in the art. However, these suffer from a number of short-comings or disadvantages. Even when not operating beyond diver depth, such a device may be desired, since many operators do not want to use divers even where practical. There is therefore a need for a new, simple, robust and easy to use connector.

A known device is the Delmar Subsea Connector as described in US 6,158,093 (DELMAR SYSTEMS, INC.). The Delmar connector requires buoyancy/heave compensation for installation, and is manufactured as a casting which rules such out of some projects. Further, the Delmar connector has no inherent alignment and is similar to a loose shackle.

Another known type of connector is the so-called ball and taper connector. Such are commercially available from Balltec Limited (www.balltec.com) as MoorLok™ and from First Subsea Limited (www.firstsubsea.com) as Ballgrab™. The Balltec connector is described in WO 2006/109065 A1.

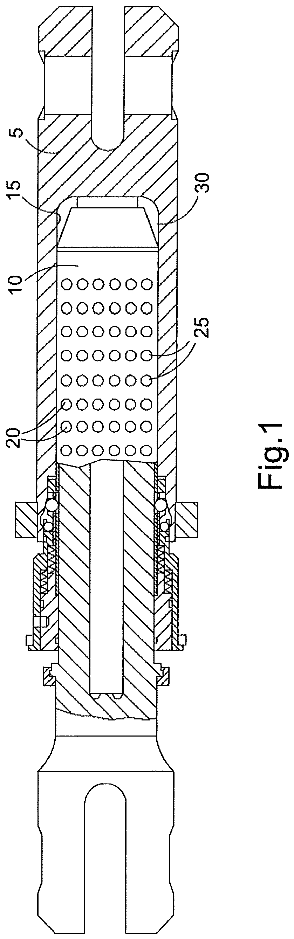

Ball and taper connectors utilise the ball and taper principle as schematically illustrated in Figure 1. The ball and taper connector 5 comprises a male portion or mandrel 10 and a female portion or receptacle 15. The male portion 10 carries a ball cage 20 and a plurality of balls 25. When the male portion 10 and ball cage 20 enter the female portion 15 and (longitudinal) load is applied, the balls 25 contact an inner face 30 of the female portion 15. A resultant (radial) force is produced and a connection formed between the male portion 10 and female portion 15. If the load is removed, the ball cage 20 is drawn back, the balls 25 lose contact with the female portion 15, and the connection separates.

WO 98/11415 (Lockheed Corporation) discloses a rotating lug connector for anchoring the tether of a tension leg platform to the sea floor.

US 2012/0031320 (Bauduin et al.) discloses a mooring leg connector for use with a mooring leg extending up from the sea floor to connect a floating structure to be moored to the seabed.

GB 2 178 101 (Hunting Oilfield Services Limited) discloses a connector for connecting members in tension comprising a first body and a second body, each for connection to a member.

EP 0 302 546 (Agip S.p.A) discloses a set of reversible mechanical coupling and relevant seat for linking anchorages under tension to the foundation bases.

### SUMMARY OF INVENTION

According to a first aspect of the present invention there is provided a mooring connector according to the appended claims. The connector comprises a first portion and a second portion, means for connecting the first portion and the second portion, and means for rotationally aligning the first portion and the second portion.

The first and second portions may be connectable to a respective line, such as a respective mooring chain.
. The means for rotationally aligning may comprise a first alignment member, such as a rotational alignment member, provided by the first or second portion.

The means for rotationally aligning may comprise a second alignment member at least partly spanning across a bore, such as an internal bore, of the other of the first or second portion. The second alignment member may be partially transverse to the bore with respect to a longitudinal axis of the first or second portion.

The first and second alignment members may co-act when the first and second portions are brought together or mated.

The first portion may comprise a male part.

The second portion may comprise a female part.

The means for connecting may comprise means for releasably connecting.

The means for rotationally aligning the first portion and the second portion comprise first and second means carried by or provided on the first and second portions, respectively. The first and second means may comprise the first and second alignment members, respectively.

The first and second means may co-act, in use, when the first and second portions are brought together or mated.

The first means may comprise at least one first surface. The second means may comprise at least one second surface. An at least one first surface(s) and a second surface may abut one another and/or rotate with respect to one another around a longitudinal axis and/or ride-over one another when the first and second portions are longitudinally brought together or mated.

The first means comprise first and second prongs or teeth. The first and second prongs or teeth may be diametrically or width-wise opposite one another, i.e. disposed on opposite sides of or along a common diameter or width. Each prong or tooth may be disposed on a respective radial portion of an end of the first means. A slot or recess portion may be provided between the first and second prongs or teeth.

The male part may comprise a cylindrical portion, e.g. a cylindrical mid-portion. The female part may comprise a bore, e.g. a cylindrical bore, e.g. within which the cylindrical portion is received in a substantially tight or snug fit.

The second means comprise an elongate or cross member or alignment bar. The elongate member may at least partly span, e.g. diametrically span, the female part, e.g. the bore. The elongate member may comprise an outer (upper) facing curved surface and may be substantially cylindrical or elliptical in cross-section.

In use, insertion of the male part into the female part may cause the first means and second means to rotationally co-act or ride over one another, thereby relatively (longitudinally) rotating the male part and the female part into a pre-selected or predetermined rotational disposition.

The first prong or tooth, and where provided second prong or tooth, may provide the at least one first surface, which may comprise an outer surface thereof.

The/each prong or teeth/tooth may comprise one or more of:
a first chamfered, sloping or angled side surface, a second chamfered, sloping or angled side surface (preferably disposed symmetrically with the first side surface), a flat/planar inner surface which may comprise a surface of the slot, and a curved outer surface. The flat planar inner surface may taper or flare outwards towards an end of the prong or tooth.

A first side surface of a first tooth may be continuous with a first side surface of a second tooth. A second side surface of a first tooth may be continuous with a second side surface of the second tooth.

The elongate member may provide the at least second surface, which may comprise an outer surface thereof, e.g. said outer (upper) facing curved surface.

Once in the pre-selected rotational disposition the first and second prongs may be disposed on respective first and second sides of the elongate member. A portion of the male part between the prongs or teeth (e.g. a root or web portion), e.g. base of the slot portion may be adjacent or in contact, e.g. abutting contact, with the elongate member.

The means for connecting the first portion and the second portion may comprise a first aperture in the male part, e.g. diametrically or width-wise spanning the cylindrical portion of the male part.

The means for connecting the first portion and the second portion may comprise at least one second aperture, e.g. a pair of diametrically opposed apertures, in the female part.

The means for connecting the first portion and the second portion may comprise a pin, e.g. a load (bearing) pin, removably receivable within the first and second apertures when such are aligned.

Beneficially, the first and second apertures are aligned in said pre-selected rotational disposition.

In use, an ROV (remotely operated vehicle) may be used to mate and/or release the first and second parts, e.g. subsea/underwater, and/or to insert and/or remove the pin.

The pin may have a tapered end, which may facilitate insertion thereof into the apertures.

Beneficially, the first portion, second portion and/or pin may be made from a metal or metallic material. Beneficially the first portion, second portion and/or pin are made by forging. A distal end of each of the first portion and the second portion may comprise means for connecting to the line. Alternatively, the line may be wire, synthetic (e.g. polyester). The line connection means may comprise a clevis fastener, e.g. comprising a clevis, clevis pin and tang.

A perimeter of the first aperture may comprise a first perimeter portion and a second perimeter portion.

The second perimeter portion may be provided closer to an end of the first portion than the first perimeter portion.

The first perimeter portion may comprise a portion of the circumference of a first circle (of the radius R₁).

The second perimeter portion may comprise a portion of the circumference of a second circle (of radius R₂).

Beneficially R₁ may be greater than R₂.

A centre of the second circle may be closer to an end of the first portion than a centre of the first circle may be to the end of the first portion.

A perimeter of the second aperture(s) may comprise the circumference of a third circle (of radius R₃).

According to a disclosed example there is provided a connector, such as a subsea connector, comprising a male part and a female part and a pin for releasably connecting the male part and the female part together.

The male part may comprise a first portion.

The female part may comprise a second portion.

The male part may comprise a first aperture, e.g. diametrically or width-wise, spanning the male part, e.g. a cylindrical portion of the male part.

The female part may comprise at least one second aperture, e.g. a pair of diametrically opposed apertures. The pin may be removably insertable with the first and second apertures, e.g. when the first and second apertures are rotationally aligned.

A perimeter of the first aperture may comprise a first perimeter portion and a second perimeter portion.

The second perimeter portion may be provided closer to an end of the first portion than the first perimeter portion.

The first perimeter portion may comprise a portion of the circumference of a first circle (of the radius R₁).

The second perimeter portion may comprise a portion of the circumference of a second circle (of radius R₂).

Beneficially R₁ may be greater than R₂.

A centre of the second circle may be closer to an end of the first portion than a centre of the first circle may be to the end of the first portion.

A perimeter of the second aperture(s) may comprise the circumference of a third circle (of radius R₃).

Optional features of the connector according to the disclosed example may comprise features of the first aspect, whether taken alone or in combination with the first aspect, and such features are not repeated herein merely for reasons of brevity.

According to a second aspect of the present invention there is provided a first portion according to the appended claims.

According to a third aspect of the present invention there is provided a second portion according to the appended claims.

According to a fourth aspect of the present invention there is provided a subsea structure moored by one or more lines, at least one of the lines comprising at least one connector according to the first aspect of the present invention.

According to a fifth aspect of the present invention there is provided a method of mooring a subsea structure by one or more lines comprising the step of connecting at least one of said lines with a connector according to the first aspect of the present invention.

### BRIEF DESCRIPTION OF DRAWINGS

An embodiment of the present invention will now be described by way of example only, and with reference to the accompanying drawings, which are:
- **Figure 1**: a schematic cross-sectional view of part of a ball and taper connector according to the prior art;
- **Figure 2**: a perspective cross-sectional view of a connector according to an embodiment of the present invention prior to connection;
- **Figure 3**: a perspective view of a first portion of the connector of Figure 2;
- **Figure 4**: a further perspective view of the first portion of the connector of Figure 2 rotated through 90° with respect to Figure 3;
- **Figure 5**: a perspective view of a second portion of the connector of Figure 2;
- **Figure 6**: a schematic view of a second portion of the connector of Figure 2 mounted on a suction pile;
- **Figure 7**: a schematic view of the connector of Figure 2 mounted on the suction pile of Figure 6 with the first portion received by and within the second portion;
- **Figure 8**: a schematic view of the connector of Figure 2 mounted on a suction pile with the first portion received by and within the second portion and connection means in place;
- **Figure 9**: a schematic view similar to Figure 8 with retention means removed;
- **Figure 10**: a schematic view of the connector deployed;
- **Figure 11**: a schematic view of the suction pile and a line connected thereto; and
- **Figure 12**: a side view of a modified first portion according to an alternative embodiment of the present invention.

### DETAILED DESCRIPTION OF DRAWINGS

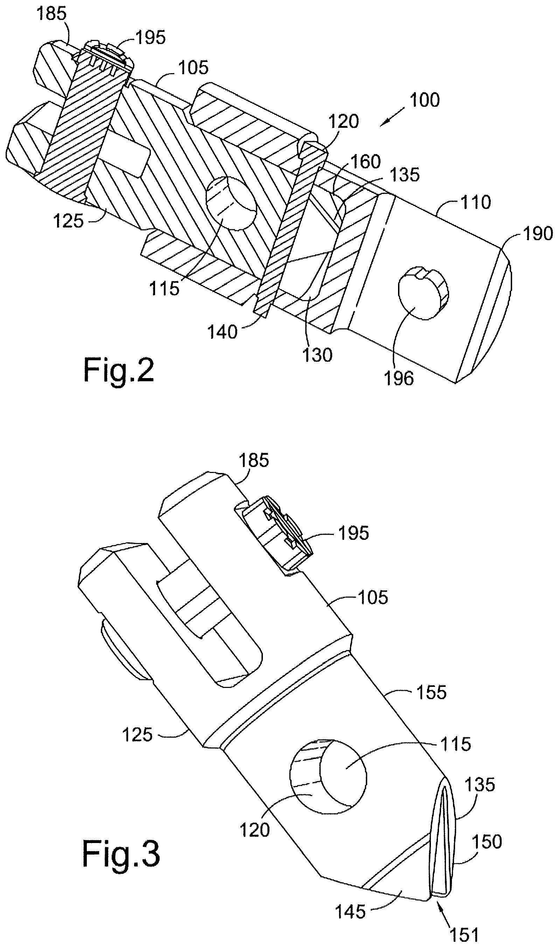

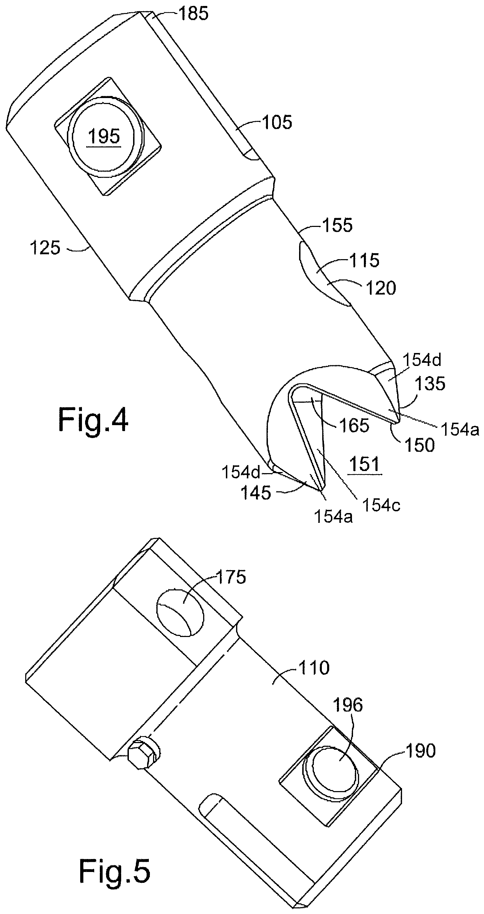

Referring to Figures 2 to 5, there is shown a connector, particularly a subsea or underwater connector, generally designated 100 according to an embodiment of the present invention. The connector 100 comprises a first portion 105 and a second portion 110, means 115 for connecting the first portion 105 and the second portion 110, and means 120 for rotationally aligning the first portion 105 and the second portion 110.

The first portion 105 comprises a male part 125. The second portion 110 comprises a female part 130. The means 115 for connecting comprises means for releasably connecting. The means 120 for rotationally aligning the first portion 105 and the second portion 110 comprises first and second means 135,140 carried by or provided on the first and second portions 105,110, respectively. The first and second means 135,140 co-act, in use, when the first and second portions 105,110 are brought together or mated.

The first means 135 comprises at least one first surface. The second means 140 comprises at least one second surface. In use, the first surface(s) and the second surface(s) abut and rotate with respect to one another and/or ride over one another around a longitudinal axis when the first and second portions 105,110 are longitudinally brought together.

In this embodiment the first means 135 comprises first and second prongs or teeth 145,150. The first and second prongs or teeth 145,150 are diametrically or width-wise opposed to one another. Also in this embodiment the first and second prongs or teeth 145,150 are shaped as described hereinbelow. A slot portion 151 is provided between the first and second prongs or teeth 145,150.

The male part 125 comprises a cylindrical mid portion 155. The female part 130 comprises a cylindrical bore 160.

The second means 140 comprises an elongate member 140 (or alignment bar). The elongate member 140 spans at least partly, e.g. diametrically spans, the cylindrical bore 160 and the female part 130. The elongate member 140 is partially transverse to the bore 160 of the female part 130. The elongate member 140 comprises an outer facing curved surface, and in this embodiment is substantially cylindrical in cross-section.

In use, insertion of the male part 125 into the female part 130 causes the first means 135 and second means 140 to rotationally co-act and/or ride over one another, thereby relatively rotating the male part 125 and the female part 130 into a pre-selected rotational disposition. The first and second prongs or teeth 145,150 provide the at least one first surface, i.e. in this embodiment a pair of first surfaces, which comprise outer surfaces thereof. The/each prong or tooth comprises: a first chamfered or sloping side surface 154a, a second chamfered or sloped side surface 154b, a flat inner surface 154c, and a curved outer surface 154d.

The elongate member 140 provides the at least one second surface which comprises an outer surface thereof.

Once in the pre-selected rotational disposition, the first and second prongs or teeth 145,150 are disposed respective first and second sides of the elongate member 140. A portion 165 of the male part 125 between the prongs or teeth 145,150 (e.g. a web portion), e.g. base of the slot portion, is adjacent or in contact, e.g. abutting contact, with the elongate member 140.

The means 115 for connecting the first portion 105 and the second portion 110 comprise a first aperture 120 in the male part 125, e.g. diametrically or width-wise spanning the cylindrical portion 155 of the male part 125. The means 115 for connecting the first portion 105 and the second portion 110 comprise at least one second aperture 175, e.g. a pair of diametrically or width-wise opposed apertures, in the female part 130. The means 115 for connecting the first portion 105 and the second portion 110 comprise a pin 180, e.g. a load (bearing) pin, removably receivable within the first and second apertures 170,175 when such are aligned in said pre-selected disposition.

Beneficially, the first and second apertures 170,175 are aligned in said pre-selected rotational disposition. The pin 180 can be releasably retained in the apertures 170,175, e.g. by interacting screw threads and/or a tang (not shown).

In use, an ROV (remotely operated vehicle) can be used to mate (and/or release) the first and second portions 105,110, e.g. subsea/underwater and/or to insert (and/or remove) the pin 180. The pin 180 has a tapered end, which can facilitate insertion thereof into the aligned apertures 170,175.

Beneficially, the first portion 105, second portion 110 and/or pin 180 are made from a metal or metallic material. Beneficially the first portion 105, second portion 110 and/or pin 180 are made by forging.

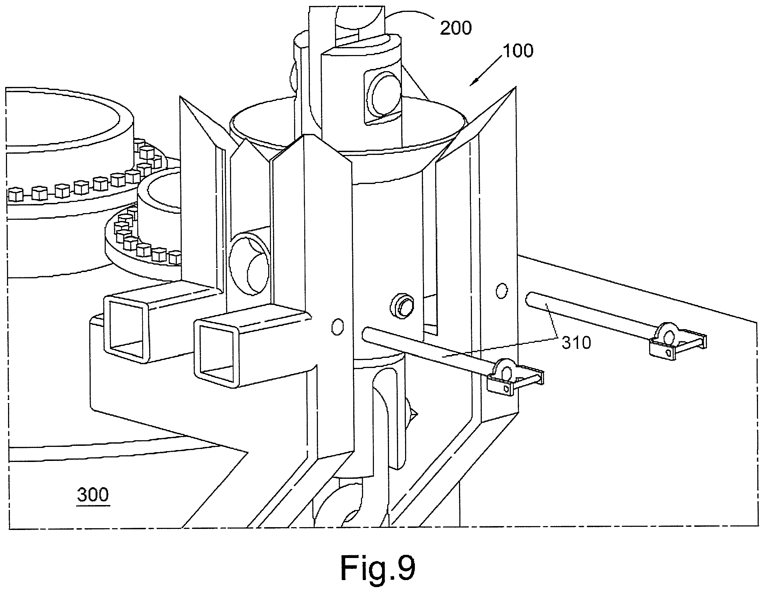

Distal ends 185,190 of each of the first portion 105 and the second portion 110 comprises means 195,196 for connecting to line. Referring to Figure 9, the line 200 can be wire, chain, synthetic (e.g. polyester). The line connection means 195,196 comprises a clevis fastener, e.g. comprising a clevis, clevis pin and tang.

The connector 100 comprises male part 125 and female part 130 and a pin 180 for releasably connecting the male part 125 and the female part 130 together. The male part 125 comprises a first portion 105. The female part 130 comprises a second portion 110.

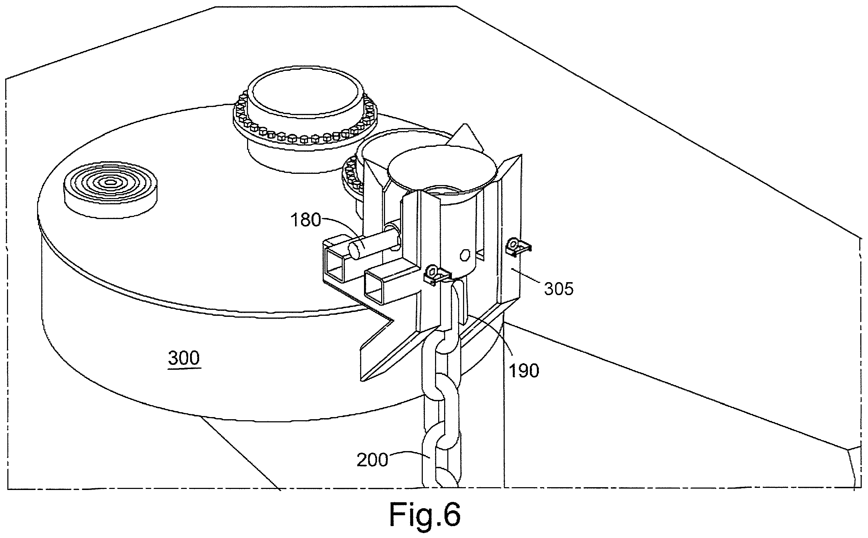

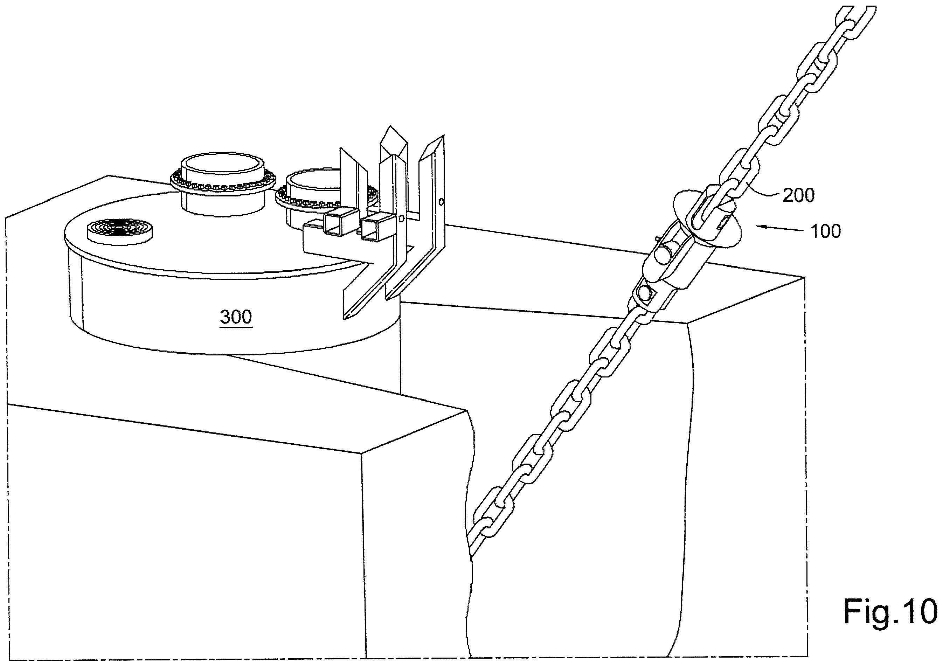

Referring now to Figures 6 to 10, there is shown a subsea, underwater or offshore equipment, apparatus or structure 300 moored, anchored or fixed by one or more lines 200, at least one of the lines 200 comprising at least one connector 100.

In use, a method of mooring, anchoring or fixing an offshore equipment, apparatus or structure 300 with one or more lines 200 comprises the step of connecting at least one of the said lines 200 with or by a connector 100.

Referring initially to Figure 6, the second portion 110 of the connector 10 of Figure 2 is mounted on a suction pile 300. The portion of a line extends from the second portion 110 of the connector to a base portion of the suction pile 300. The second portion 110 is retained by retaining pins in a retaining cradle 305. The second portion 110 is further provided with an outer cylindrical housing 197 having an upper end thereof an open inverted frusto-conical portion or guide cone 198 which communicates with the female part.

The guide cone 198 assists in lowering the male part 125 into the female part 130. The receiving cradle 305 comprises spaced support means in order to assist receiving or parking the female part 130 in the receiving cradle on the side of the suction pile. The receiving cradle 305 holds the female part 130 securely on the suction pile 300 as the pile 300 is lifted to the sea-bed and holds such in a vertical orientation for insertion of the male part 125.

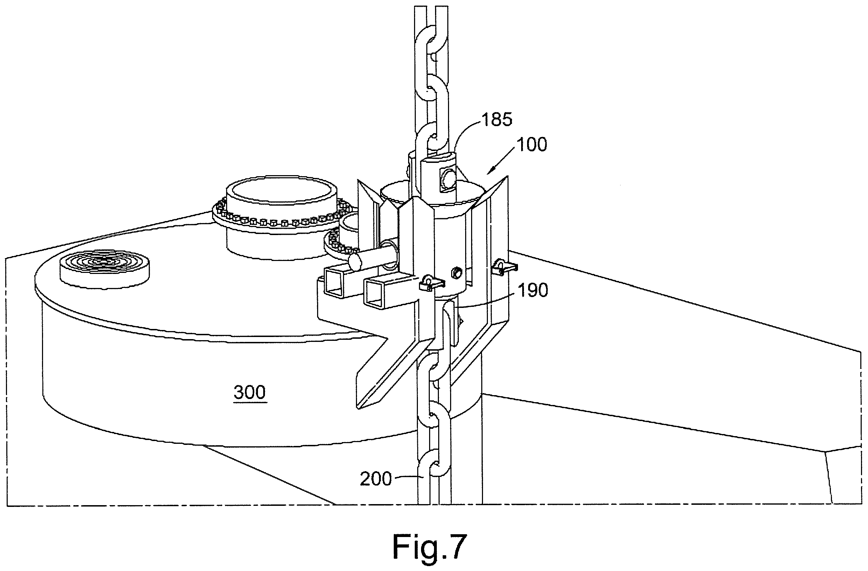

Referring to Figure 7, the male part 125 is presented to the female part 130, and the male part 125 being connected to a second portion of the line.

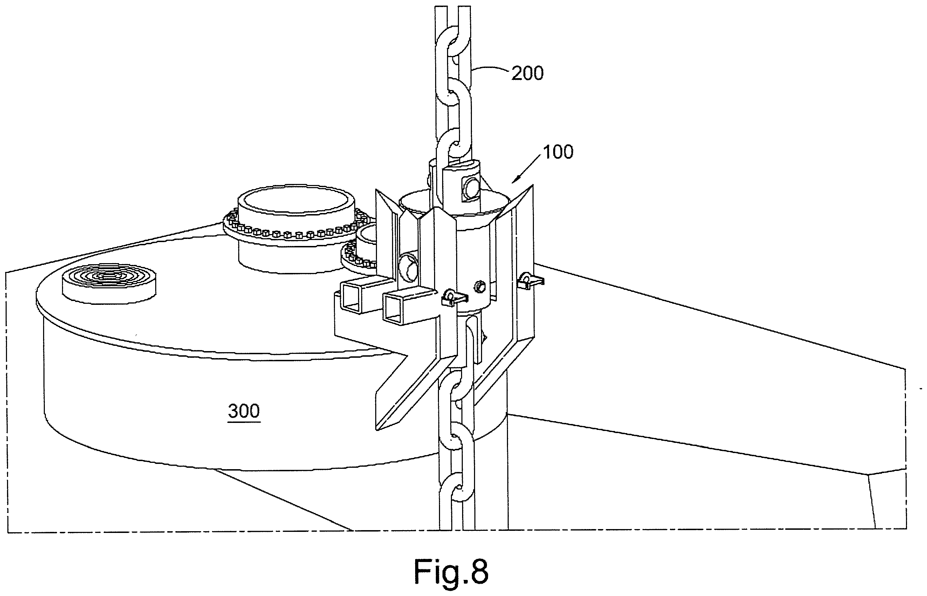

Referring to Figures 7 and 8, a locking pin 180 is inserted into the aligned apertures of the first and second parts 125,130 so as to connect them together.

Referring to Figure 9, retaining means or retaining pins 310 are removed so as to allow release of the second part 130 from the retaining cradle.

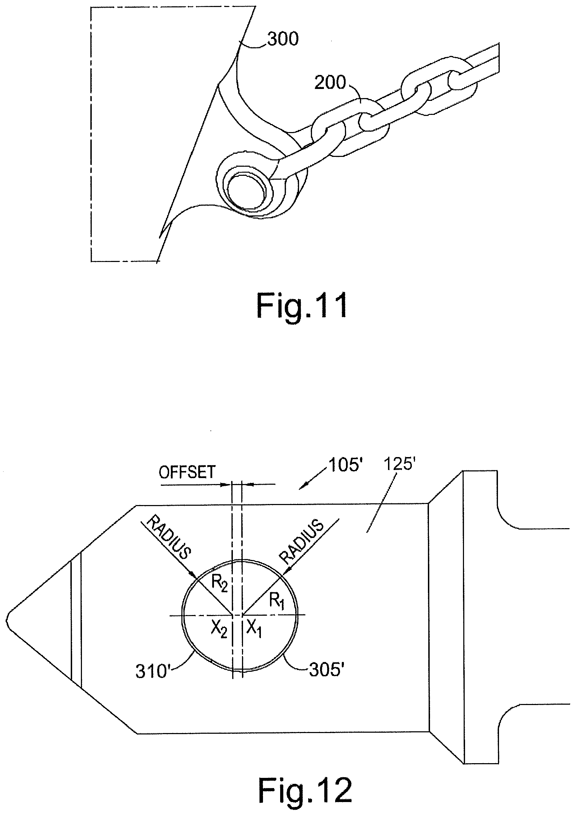

Referring to Figure 11, the line 200 comprising the first portion of line and second portion of line connected by the connector 10 can then be deployed, so as to anchor the offshore equipment apparatus or structure via the suction pile 300.

Referring to Figure 11, it can be seen that the first portion of the line is connected to the suction pile 300 via a welded pad eye.

Referring now to Figure 12, there is shown a side view of a modified first portion 105' according to an alternative embodiment of the present invention.

In this alternative embodiment a perimeter of the first aperture comprises a first perimeter portion 300' and a second perimeter portion 305'. The second perimeter portion 305' is provided closer to an end of the male part 125' than the first perimeter portion 300'.

The first perimeter portion 300' comprises a portion of the circumference of a first circle (of the radius R₁). The second perimeter portion 305' comprises a portion of the circumference of a second circle (of radius R2). Beneficially R₁ is greater than R₂.

A centre X₂ of the second circle is closer to an end of the male part 125' than a centre X₁ of the first circle is to the end of the male portion 125'.

A perimeter of the second aperture(s) comprises the circumference of a third circle (of radius R3).

In use, when the first portion 105' is lowered into the receptacle, the second aperture of the female portion is in axial alignment with the centre X₁ of the portion of the first aperture with larger radius R₁. This provides for relatively large clearance between the first portion 105' and the pin, which facilitates for ease of installation of the pin.

When the connector 100 is tensioned and under load, the first portion 105' moves back out of the receptacle by an offset amount, i.e. a distance between centre X₁ of the first circle and centre X₂ of second circle. The pin then contacts second perimeter portion of radius R₂. This acts to increase a contact area between the pin and first portion 105', in use, when under load. Such acts to reduce contact stress between the first potion 105' and the pin and/or provides for longer fatigue life in use.

It will also be appreciated that the embodiments of the present invention hereinbefore described are given by way of example only, and are not meant to limit the scope of the invention in any way.

The present invention provides particular advantage over the prior art, in that it provides 'top entry' connection, i.e. the male part is inserted within the female part in a vertical disposition, which facilitates particular ease of connection. It will also be understood that the connector of the present invention provides a structural load bearing element.

While the disclosed embodiment discloses use of a suction pile, it will be appreciated that other types of anchors can be used, such as driven piles and drag embedment anchors, and suction embedded anchors, torpedo anchors, or the like.

It will be appreciated that the present invention may be advantageous or beneficial, since as the offshore industry moves to ultra-deep waters, new mooring technology is beneficial, e.g. for mobile offshore drilling units (MODUs), and deep water production vessels (FOSOs, FSOs, TiPs and Spars). The connector of the invention provides a disconnectable, permanent subsea mooring connector which allows operators to change out mooring components with an anchor handling vessel (AHV) without having to unseat an anchor.

## Claims

1. A mooring connector (100) comprising a first portion (105) and a second portion (110), means (115) for connecting the first portion (105) and the second portion (110), and means (120) for rotationally aligning the first portion (105) and the second portion (110), wherein the means (120) for rotationally aligning the first portion (105) and the second portion (110) comprise first (135) and second (140) means carried by or provided on the respective first and second portions, the first means comprising first and second prongs or teeth (145, 150) and the second means comprising an elongate member (140).

2. A mooring connector as claimed in any preceding claim, wherein the first (105) and second (110) portions are connectable to a respective line or chain.

3. A mooring connector as claimed in any preceding claim, wherein the first means define a respective first alignment member, such as a rotational alignment member, provided by the first portion, and/or
wherein the second means define a respective second alignment member at least partly spanning across a bore (160), such as an internal bore, of the second portion, optionally
wherein the second alignment member is partially transverse to the bore with respect to a longitudinal axis of the first or second portion, and optionally
wherein the first and second alignment members co-act when the first and second portions are brought together.

4. A mooring connector as claimed in any preceding claim, wherein the first portion (105) comprises a male part (125) and the second portion (110) comprises a female part (130).

5. A mooring connector as claimed in any preceding claim, wherein the means for connecting comprise means for releasably connecting.

6. A mooring connector as claimed in any preceding claim, wherein the first and second means co-act when the first and second portions are brought together or mated.

7. A mooring connector as claimed in any of the preceding claims, wherein the first means (135) comprise at least one first surface and the second means (140) comprise at least one second surface, optionally
wherein an at least one first surface(s) and a second surface abut one another and/or rotate with respect to one another around a longitudinal axis and/or ride-over one another when the first and second portions are longitudinally brought together or mated.

8. A mooring connector as claimed in any of the preceding claims, wherein the first and second prongs or teeth (145, 150) are diametrically or width-wise opposite one another, optionally, disposed on opposite sides of or along a common diameter or width, or
wherein each prong or tooth is disposed on a respective radial portion of an end of the first means, and/or
wherein a slot (151) or recess portion is provided between the first and second prongs or teeth.

9. A mooring connector as claimed in any of claims 4 to 8, wherein the male part (125) comprises a cylindrical portion (155), and wherein the female part comprises a bore (160) within which the cylindrical portion is received in a substantially tight or snug fit.

10. A mooring connector as claimed in any preceding claim, wherein the elongate member (140) at least partly spans, such as diametrically spans, the female part, optionally the bore (160).

11. A mooring connector as claimed in any of claims 4 to 10, wherein insertion of the male part (125) into the female part (130) causes the first means (135) and second means (140) to rotationally co-act or ride over one another, thereby relatively longitudinally rotating the male part and the female part into a pre-selected or predetermined rotational disposition, optionally
wherein in the pre-selected rotational disposition the first and second prongs (145, 150) are disposed on respective first and second sides of the elongate member and/or a portion of the male part between the prongs or teeth (145, 150) is adjacent or in contact with the elongate member (140).

12. A mooring connector as claimed in any preceding claim, wherein the means (115) for connecting the first portion (105) and the second portion (110) comprise a first aperture (120) in the male part (125), spanning diametrically or width-wise the cylindrical portion (155) of the male part (125), and/or
wherein the means (115) for connecting the first portion and the second portion comprise at least one second aperture (175) in the female part (130), optionally in either case
wherein the means (115) for connecting the first portion and the second portion comprise a pin (180), removably receivable within the first and second apertures (170, 175) when such are aligned, and/or
wherein the first and second apertures (170, 175) are aligned in said pre-selected rotational disposition, and/or
wherein a remotely operated vehicle is used to mate and/or release the first and second portions, and/or to insert and/or remove the pin (180), and/or
wherein a perimeter of the first aperture comprises a first perimeter portion (300') and a second perimeter portion (305'), and wherein the second perimeter portion is provided closer to an end of the first portion than the first perimeter portion, and optionally in such case
wherein the first perimeter portion (300') comprises a portion of the circumference of a first circle (of the radius R₁), and wherein the second perimeter portion (305) may comprise a portion of the circumference of a second circle (of radius R₂), optionally
wherein R₁ is greater than R₂ or
wherein a centre (X2) of the second circle is closer to an end of the first portion than a centre of the first circle (x1) is to the end of the first portion, and optionally in any case
wherein a perimeter of the second aperture(s) comprises the circumference of a third circle (of radius R₃).

13. A subsea structure (300) moored by one or more lines (200), wherein at least one of the lines comprises at least one connector (100) according to any of claims 1 to 12.

14. A method of mooring a subsea structure (300) by one or more lines (200) comprising the step of connecting at least one of said lines (200) with a connector (100) according to any of claims 1 to 12.

## Patentansprüche

1. Festmachverbinder (100), umfassend einen ersten Abschnitt (105) und einen zweiten Abschnitt (110), ein Mittel (115) zum Verbinden des ersten Abschnitts (105) mit dem zweiten Abschnitt (110), und ein Mittel (120) zum Ausrichten in Rotation des ersten Abschnitts (105) mit dem zweiten Abschnitt (110), wobei das Mittel (120) zum Ausrichten in Rotation des ersten Abschnitts (105) mit dem zweiten Abschnitt (110) ein erstes (135) und zweites (140) Mittel umfasst, die jeweils durch den ersten und den zweiten Abschnitt getragen werden bzw. daran bereitgestellt sind, wobei das erste Mittel eine erste und zweite Zacke oder Zahn (145, 150) und das zweite Mittel ein verlängertes Glied (140) umfasst.

2. Festmachverbinder nach dem vorherigen Anspruch, wobei der erste (105) und zweite (110) Abschnitt mit einer jeweiligen Leine oder Kette verbunden werden können.

3. Festmachverbinder nach einem der vorherigen Ansprüche, wobei das erste Mittel ein jeweiliges erstes Ausrichtungsglied definiert, in der Art eines Rotations-Ausrichtungsgliedes, welches vom ersten Abschnitt bereitgestellt ist, und/oder
wobei das zweite Mittel ein jeweiliges zweites Ausrichtungsglied, welches sich mindestens teilweise durch eine Bohrung (160) in der Art einer internen Bohrung erstreckt, des zweiten Abschnitts definiert, wahlweise,
wobei das zweite Ausrichtungsglied teilweise quer zur Bohrung in Bezug auf eine Längsachse des ersten oder zweiten Abschnitts liegt, und wahlweise,
wobei das erste und zweite Ausrichtungsglied gemeinsam agieren, wenn der erste und zweite Abschnitt zusammengebracht werden.

4. Festmachverbinder nach einem der vorherigen Ansprüche, wobei der erste Abschnitt (105) einen männlichen Teil (125) und der zweite Abschnitt (110) einen weiblichen Teil (130) umfasst.

5. Festmachverbinder nach einem der vorherigen Ansprüche, wobei das Mittel zum Verbinden ein Mittel für ein lösbares Verbinden umfasst.

6. Festmachverbinder nach einem der vorherigen Ansprüche, wobei das erste und zweite Mittel gemeinsam agieren, wenn der erste und zweite Abschnitt zusammen gebracht oder verpaart werden.

7. Festmachverbinder nach einem der vorherigen Ansprüche, wobei das erste Mittel (135) mindestens eine erste Fläche und das zweite Mittel (140) mindestens eine zweite Fläche umfasst, wahlweise,
wobei eine mindestens eine oder mehr erste Flächen und eine zweite Fläche aneinander stoßen und/oder in Bezug aufeinander um eine Längsachse drehen und/oder einander überdecken, wenn der erste und zweite Abschnitt in Längsrichtung zusammen gebracht oder verpaart werden.

8. Festmachverbinder nach einem der vorherigen Ansprüche, wobei die erste und zweite Zacke oder Zahn (145, 150) einander diametral oder in Breitenrichtung gegenüber stehen, wahlweise, an gegenüberliegenden Seiten von oder entlang eines gemeinsamen Durchmessers oder einer gemeinsamen Breite angeordnet sind, oder
wobei jede Zacke oder jeder Zahn an einem jeweiligen radialen Abschnitt eines Endes des ersten Mittels angeordnet ist, und/oder
wobei ein Schlitz (151) oder ein Vertiefungsabschnitt zwischen der ersten und zweiten Zacke oder Zahn bereitgestellt ist.

9. Festmachverbinder nach einem der Ansprüche 4 bis 8, wobei der männliche Teil (125) einen zylindrischen Abschnitt (155) umfasst, und wobei der weibliche Teil eine Bohrung (160) umfasst, in welcher der zylindrische Abschnitt in einem im Wesentlichen engen oder festen Passsitz aufgenommen wird.

10. Festmachverbinder nach einem der vorherigen Ansprüche, wobei sich das verlängerte Glied (140) mindestens teilweise, wie beispielsweise diametral, über den weiblichen Teil erstreckt, wahlweise über die Bohrung (160).

11. Festmachverbinder nach einem der Ansprüche 4 bis 10, wobei das Einführen des männlichen Teils (125) in den weiblichen Teil (130) das erste Mittel (135) und das zweite Mittel (140) dazu veranlasst, in der Rotation gemeinsam zu agieren oder einander zu überdecken, wodurch der männliche Teil und der weibliche Teil relativ zueinander in Längsrichtung in eine vorgewählte oder vorbestimmte Rotationsanordnung gedreht werden, wahlweise,
wobei in der vorgewählten Rotationsanordnung die erste und zweite Zacke (145, 150) auf einer jeweiligen ersten und zweiten Seite des verlängerten Gliedes angeordnet sind und/oder ein Abschnitt des männlichen Teils zwischen den Zacken oder Zähnen (145, 150) neben dem verlängerten Glied (140) angeordnet oder mit diesem in Kontakt ist.

12. Festmachverbinder nach einem der vorherigen Ansprüche, wobei das Mittel (115) zum Verbinden des ersten Abschnitts (105) mit dem zweiten Abschnitt (110) eine erste Öffnung (120) im männlichen Teil (125) umfasst, welche sich diametral oder in Breitenrichtung über den zylindrischen Abschnitt (155) des männlichen Teils (125) erstreckt, und/oder
wobei das Mittel (115) zum Verbinden des ersten Abschnitts mit dem zweiten Abschnitt mindestens eine zweite Öffnung (175) im weiblichen Teil (130) umfasst, wahlweise in beiden Fällen,
wobei das Mittel (115) zum Verbinden des ersten Abschnitts mit dem zweiten Abschnitt einen Stift (180) umfasst, welcher abnehmbar in der ersten und zweiten Öffnung (170, 175) aufgenommen werden kann, wenn diese ausgerichtet werden, und/oder
wobei die erste und zweite Öffnung (170, 175) in der vorgewählten Rotationsanordnung ausgerichtet werden, und/oder
wobei ein fernbedientes Fahrzeug verwendet wird, um den ersten Abschnitt mit dem zweiten Abschnitt zu verpaaren und/oder den ersten Abschnitt vom zweiten Abschnitt zu lösen, und/oder um den Stift (180) einzuführen und/oder zu entfernen, und/oder
wobei ein Umkreis der ersten Öffnung einen ersten Umkreisabschnitt (300') und einen zweiten Umkreisabschnitt (305') umfasst, und wobei der zweite Umkreisabschnitt näher an einem Ende des ersten Abschnitts als der erste Umkreisabschnitt bereitgestellt ist, und wahlweise, in einem solchen Fall,
wobei der erste Umkreisabschnitt (300') einen Abschnitt des Umfangs eines ersten Kreises (mit Radius R₁) umfasst, und wobei der zweite Umkreisabschnitt (305) einen Abschnitt des Umfangs eines zweiten Kreises (mit Radius R₂) umfassen kann, wahlweise,
wobei R₁ größer ist als R₂ oder
wobei eine Mitte (X2) des zweiten Kreises näher an einem Ende des ersten Abschnitts liegt als eine Mitte des ersten Kreises (x1) am Ende des ersten Abschnitts liegt, und wahlweise, in jedem Fall,
wobei ein Umkreis der zweiten Öffnung(en) den Umfang eines dritten Kreises (mit Radius R₃) umfasst.

13. Subsea-Struktur (300), festgemacht durch eine oder mehrere Leinen (200), wobei mindestens eine der Leinen mindestens einen Verbinder (100) nach einem der Ansprüche 1 bis 12 umfasst.

14. Verfahren zum Festmachen einer Subsea-Struktur (300) durch eine oder mehrere Leinen (200), umfassend den Schritt des Verbindens von mindestens einer der Leinen (200) mit einem Verbinder (100) nach einem der Ansprüche 1 bis 12.

## Revendications

1. Connecteur d'amarrage (100) comprenant une première partie (105) et une deuxième partie (110), un moyen (115) destiné à connecter la première partie (105) et la deuxième partie (110), et un moyen (120) destiné à aligner en rotation la première partie (105) et la deuxième partie (110), dans lequel le moyen (120) destiné à aligner en rotation la première partie (105) et la deuxième partie (110) comprend des premier (135) et deuxième (140) moyens portés par ou prévus sur les première et deuxième parties respectives, le premier moyen comprenant des première et deuxième languettes de contact ou dents (145, 150) et le deuxième moyen comprenant un organe allongé (140).

2. Connecteur d'amarrage selon la revendication précédente, dans lequel les première (105) et deuxième (110) parties peuvent être connectées à une ligne ou à une chaîne respective.

3. Connecteur d'amarrage selon l'une quelconque des revendications précédentes, dans lequel le premier moyen définit un premier organe d'alignement respectif, tel qu'un organe d'alignement rotatif, fourni par la première partie, et/ou
dans lequel le deuxième moyen définit un deuxième organe d'alignement respectif traversant au moins parti ellement un alésage (160), tel qu'un alésage interne, de la deuxième partie, optionnellement
dans lequel le deuxième organe d'alignement est partiellement transversal à l'alésage par rapport à un axe longitudinal de la première ou de la deuxième partie, et optionnellement
dans lequel les premier et deuxième organes d'alignement coagissent lorsque les première et deuxième parties sont mises ensemble.

4. Connecteur d'amarrage selon l'une quelconque des revendications précédentes, dans lequel la première partie (105) comprend un élément mâle (125) et la deuxième partie (110) comprend un élément femelle (130).

5. Connecteur d'amarrage selon l'une quelconque des revendications précédentes, dans lequel le moyen de connexion comprend un moyen de connexion amovible.

6. Connecteur d'amarrage selon l'une quelconque des revendications précédentes, dans lequel les premier et deuxième moyens coagissent lorsque les première et deuxième parties sont mises ensemble ou accouplées.

7. Connecteur d'amarrage selon l'une quelconque des revendications précédentes, dans lequel le premier moyen (135) comprend au moins une première surface et le deuxième moyen (140) comprend au moins une deuxième surface, optionnellement
dans lequel une au moins une ou plusieurs premières surfaces et une deuxième surface butent l'une contre l'autre et/ou tournent l'une par rapport à l'autre autour d'un axe longitudinal et/ou se chevauchent lorsque les première et deuxième parties sont mises ensemble ou accouplées longitudinalement.

8. Connecteur d'amarrage selon l'une quelconque des revendications précédentes, dans lequel les première et deuxième languettes de contact ou dents (145, 150) sont opposées sur le diamètre ou la largeur, optionnellement, disposées sur des côtés opposés ou le long d'un diamètre commun ou d'une largeur commune, ou
dans lequel chaque languette de contact ou dent est disposée sur une partie radiale respective d'une extrémité du premier moyen, et/ou
dans lequel une fente (151) ou partie creuse est prévue entre les première et deuxième languettes de contact ou dents.

9. Connecteur d'amarrage selon l'une quelconque des revendications 4 à 8, dans lequel l'élément mâle (125) comprend une partie cylindrique (155), et dans lequel l'élément femelle comprend un alésage (160) au sein duquel la partie cylindrique est reçue dans un ajustage sensiblement serré ou à frottement doux.

10. Connecteur d'amarrage selon l'une quelconque des revendications précédentes, dans lequel l'organe allongé (140) couvre au moins partiellement, tel que le diamètre, l'élément femelle, optionnellement l'alésage (160).

11. Connecteur d'amarrage selon l'une quelconque des revendications 4 à 10, dans lequel l'insertion de l'élément mâle (125) dans l'élément femelle (130) amène le premier moyen (135) et le deuxième moyen (140) à coagir en rotation ou se chevaucher, faisant ainsi tourner relativement longitudinalement l'élément mâle et l'élément femelle dans une disposition de rotation présélectionnée ou prédéterminée, optionnellement
dans lequel dans la disposition de rotation présélectionnée les première et deuxième languettes de contact (145, 150) sont disposées sur des premier et deuxième côtés respectifs de l'organe allongé et/ou une partie de l'élément mâle entre les languettes de contact ou dents (145, 150) est adjacente ou en contact avec l'organe allongé (140).

12. Connecteur d'amarrage selon l'une quelconque des revendications précédentes, dans lequel le moyen (115) destiné à connecter la première partie (105) et la deuxième partie (110) comprend une première ouverture (120) dans l'élément mâle (125), couvrant le diamètre ou la largeur de la partie cylindrique (155) de l'élément mâle (125), et/ou
dans lequel le moyen (115) destiné à connecter la première partie et la deuxième partie comprend au moins une deuxième ouverture (175) dans l'élément femelle (130), optionnellement dans l'un ou l'autre cas
dans lequel le moyen (115) destiné à connecter la première partie et la deuxième partie comprend une broche (180), pouvant être reçue de manière amovible à l'intérieur des première et deuxième ouvertures (170, 175) lorsqu'elles sont alignées, et/ou
dans lequel les première et deuxième ouvertures (170, 175) sont alignées dans ladite disposition de rotation présélectionnée, et/ou
dans lequel un véhicule commandé à distance est utilisé pour accoupler et/ou libérer les première et deuxième parties, et/ou pour insérer et/ou retirer la broche (180), et/ou
dans lequel un périmètre de la première ouverture comprend une première partie de périmètre (300') et une deuxième partie de périmètre (305'), et dans lequel la deuxième partie de périmètre est prévue plus près d'une extrémité de la première partie que la première partie de périmètre, et optionnellement dans un tel cas
dans lequel la première partie de périmètre (300') comprend une partie de la circonférence d'un premier cercle (du rayon R₁), et dans lequel la deuxième partie de périmètre (305) peut comprendre une partie de la circonférence d'un deuxième cercle (de rayon R₂), optionnellement
dans lequel R₁ est supérieur à R₂ ou
dans lequel un centre (X2) du deuxième cercle est plus près d'une extrémité de la première partie que ne l'est un centre du premier cercle (x1) de l'extrémité de la première partie, et optionnellement dans tous les cas
dans lequel un périmètre de la ou des deuxièmes ouvertures comprend la circonférence d'un troisième cercle (de rayon R₃).

13. Structure sous-marine (300) amarrée par une ou plusieurs lignes (200), dans laquelle au moins l'une des lignes comprend au moins un connecteur (100) selon l'une quelconque des revendications 1 à 12.

14. Procédé d'amarrage d'une structure sous-marine (300) par une ou plusieurs lignes (200) comprenant l'étape de connexion d'au moins l'une desdites lignes (200) avec un connecteur (100) selon l'une quelconque des revendications 1 à 12.
